# EUROPÄISCHE PATENTSCHRIFT

(11) **EP 3 127 840 B1**
(45) Veröffentlichungstag und Bekanntmachung des Hinweises auf die Patenterteilung: **21.03.2018**
(21) Anmeldenummer: 16182562.5
(22) Anmeldetag: 03.08.2016
(51) Int. Cl.: B65G 47/14, B65G 47/57

(54) **FÖRDERVORRICHTUNG ZUM TRANSPORT UND ZUR DOSIERUNG VON ZUFÜHR-TEILEN**
CONVEYOR DEVICE FOR TRANSPORTING AND DOSING OF SUPPLYING PARTS
DISPOSITIF DE TRANSPORT ET DE DOSAGE DE PIECES D'ALIMENTATION

(30) Priorität: 04.08.2015 DE 102015214869
(43) Veröffentlichungstag der Anmeldung: 08.02.2017
(73) Patentinhaber: Anton Kelz e. K., 87663 Lengenwang (DE)
(72) Erfinder: Kelz, Anton, 87663 Lengenwang (DE)
(74) Vertreter: Rau, Schneck & Hübner Patentanwälte Rechtsanwälte PartGmbB

(56) Entgegenhaltungen:
- WO-A1-93/10027
- DE-A1-102013 208 422
- FR-E- 75 994
- US-A1- 2004 094 389

## Beschreibung

Die Erfindung betrifft eine Fördervorrichtung zum Transport und zur Dosierung von insbesondere empfindlichen Zuführ-Teilen mit den im Oberbegriff des Patentanspruches 1 angegebenen Merkmalen.

Zum Hintergrund der Erfindung ist festzuhalten, dass in jüngerer Zeit sich Montagemaschinen erheblich fortentwickelt haben, insbesondere was die Montageleistung und universelle Art der handhabbaren Teile anbetrifft. So sind High-Tech-Montagemaschinen derzeit in der Lage, auch anspruchsvolle, geometrisch geformte, empfindliche Bauteile mit einer Leistung von beispielsweise 1000 Teilen/Minute zu verarbeiten. Mit dieser Leistungsverbesserung spielt die Problematik der kontrollierten und zuverlässigen Zu- und Wegführung der zu verarbeitenden Komponenten - im Folgenden universell als "Zuführ-Teile" bezeichnet - eine zunehmende Rolle.

Als Beispiele für solche Zuführ-Teile können filigrane mechanische Bauteile - wie Kunststoffteile, Schrauben, Muttern, aber auch komplex geformte, geometrische Bauteile wie Kontaktfedern, Stanz-Biege-Teile und dergleichen - genauso wie elektronische Bauelemente - wie beispielsweise Widerstände, Kondensatoren, Halbleiter-Chips und dergleichen - genannt werden.

Es gibt eine Bauart von Fördervorrichtungen, wie sie durch offenkundige Vorbenutzung bekannt sind, welche einen Aufgabebehälter für die Zuführ-Teile aufweisen, der mit einer Aufgabeöffnung versehen ist. An letzterer läuft mit einer vertikalen Bewegungskomponente eine Transport-Gliederkette vorbei, die aus gelenkig aneinander gekoppelten Bandsegmenten besteht. Diese sind mit zur Aufgabeöffnung hin offenen Aufnahmen für die Zuführ-Teile versehen. Bei solchen Fördervorrichtungen nach dem Stand der Technik wie auch bei allen üblichen Förderbändern und Kettenförderern sind die Aufnahmen bzw. Mitnehmer für die Zuführ-Teile als positiv geformte, erhabene Vorsprünge ausgebildet, die von unten in den Teilebunker einfahren und durch den Vorrat an Zuführ-Teilen hindurch fahren. Dies bedeutet eine erhebliche Belastung für die Teile, was insbesondere bei den eingangs genannten kleinen, empfindlichen Komponenten nachteilig ist.

Bedingt durch die in der Transport-Gliederkette erforderlichen Öffnungen sind die Übergänge bei solchen Fördervorrichtungen sehr störanfällig. Durch den erforderlichen engen, den Mitnahmeprofilen in Dicke und Abstand zwischen den Profilen angepassten Einlaufschacht für die Fördervorrichtung ist ein Verklemmen von Teilen praktisch nicht zu vermeiden. Es wird im Stand der Technik als Gegenmaßnahme versucht, im Bereich des Aufgabebehälters durch sogenannte Rückfallklappen ein Verschließen der Spalte zwischen dem Teile-Vorrat und der einlaufenden Transport-Gliederkette zu erreichen. Solche mechanische Klappen werden mithilfe der Mitnehmer-Profile an der Transport-Gliederkette geöffnet und durch Schwerkraft oder Federbeaufschlagung wieder geschlossen. Die Erfahrung hat dabei gezeigt, dass sich Zuführ-Teile häufig zwischen der Transport-Gliederkette und der Rückfallklappe verklemmen und die Klappe damit wirkungslos wird. Weiteres im Aufgabebehälter befindliches Transportgut kann dann unkontrolliert im freien Fall in den so entstandenen Spalt fallen. Insgesamt stellt eine solche Rückfallklappe eine nicht für alle Zuführ-Teile geeignete Notlösung dar, da ein Einklemmen und Beschädigen der zu transportierenden Bauteile praktisch nicht zu vermeiden ist.

Ein weiterer gravierender Problembereich bei solchen bekannten Transportbändern ist der Abwurf der geförderten Zuführ-Teile, da der Übergang zwischen den egal wie gestalteten Mitnahmeprofilen und der weiterführenden Rutsche zwangsläufig eine Störquelle darstellt. Je steiler der Aufbau solcher Fördervorrichtungen ist, desto schwieriger gestaltet sich die Übergabe der Zuführ-Teile zur weiterführenden Rutsche. Am Übergabeort nicht abgeworfene Teile können anschließend unkontrolliert von der Fördervorrichtung in deren innere Zonen fallen und dort Störungen beispielsweise in Form von Verklemmungen hervorrufen.

In diesem Zusammenhang ist dann auch darauf hinzuweisen, dass von den bekannten Fördervorrichtungen aufgrund ihrer Bauart bisweilen eine erhebliche Verletzungsgefahr, etwa durch abstehende Elemente der Förderkette, ausgeht, der durch entsprechende Schutzabdeckungen vorgebeugt werden muss. Dies bedeutet nicht nur einen zusätzlichen konstruktiven Aufwand für die Fördervorrichtung, sondern auch einen zusätzlichen Arbeitsaufwand, wenn eine solche Fördervorrichtung zu Wartungszwecken oder beispielsweise zur Entfernung von unkontrolliert im Inneren der Fördervorrichtung liegenden Zuführ-Teilen geöffnet werden muss.

Insoweit sind diese bekannten Fördervorrichtungen für den Transport von Zuführ-Teilen, insbesondere wenn dies kleinteilig ist, nur bedingt geeignet.

Ebenfalls aus dem Stand der Technik sind sogenannte Platten-Treppenförderer bzw. Stufenförderer bekannt, die in ihrer Wirkungsweise ähnlich sind. Dort sind ein oder mehrere parallel aneinanderliegende Schieber vorgesehen, die durch eine zueinander korrelierte Schiebebewegung in Vertikalrichtung für eine Vereinzelung von Zuführ-Teilen sorgt. Diese Schieber tauchen allerdings mit ihrer gesamten Schieberbreite und -dicke durch den Vorrat an Zuführ-Teilen hindurch und nehmen mit ihrer nach oben weisenden Stirnkante die zu fördernden Teile aus dem Vorratsbehälter mit, was wiederum eine hohe Teilebelastung mit sich bringt. Auch verursachen die sich ständig bewegenden Schieber mit ihrem Vor- und Rückhub viel Bewegung und eine reibende Berührung mit den im Vorratsbehälter befindlichen Teilen. Der unproduktive Rückhub der Schieber stellt zudem eine zusätzliche Belastung für das Transportgut und die Fördervorrichtung selbst dar. Mit solchen Treppen- oder Stufenförderern lässt sich eine kontinuierliche, vereinzelte, gleichmäßige Mengendosierung an Sortierteilen nicht erzielen.

Der nächstkommende Stand der Technik nach dem Oberbegriff des Anspruchs 1 ist durch die DE 10 2013 208 422 A1 definiert, die eine gegenüber dem vorstehend geschilderten Stand der Technik bereits weit verbesserte Fördervorrichtung offenbart. Diese weist einen Aufgabebehälter für die Zuführ-Teile und eine an einer Aufgabeöffnung des Aufgabebehälters mit einer vertikalen Bewegungskomponente vorbei laufende Transport-Gliederkette mit gelenkig aneinander gekoppelten Bandsegmenten auf. In Abweichung vom vorherigen Stand der Technik weisen diese Bandsegmente nun Aufnahmen für die Zuführ-Teile auf, die durch gegenüber der Plattenoberfläche in von den Zuführ-Teilen abgewandter Richtung zurückspringende Aufnahmetaschen gebildet sind. Die Transport-Gliederkette weist dann keine von der Plattenoberfläche vorspringenden und damit aktiv in den Teilevorrat eingreifenden Mitnehmer-Profile auf, so dass die Zuführ-Teile dieser verbesserten Fördervorrichtung schonender behandelt werden. Sie fallen im Wesentlichen unter Schwerkraft in die vorbeilaufenden Aufnahmetaschen hinein.

Die Aufnahmetaschen in dem jeweiligen plattenartigen Bandsegment führen jedoch auch bei dieser Fördervorrichtung zu einer zwar verringerten, aber doch vorhandenen Spaltbildung zwischen dem Aufgabebehälter und den Aufnahmetaschen beim Einlaufen in den Teilevorrat, so dass auch bei diesem System die zu transportierenden Zuführ-Teile unkontrolliert zumindest in die von unten einlaufende Aufnahmetasche fallen können. Dies kann ebenfalls zu Verklemmungen zwischen den beweglichen Bandsegmenten und den feststehenden Seitenwänden des Aufnahmebehälters führen. Die daraus entstehenden negativen Folgen können eine Beschädigung an der Fördervorrichtung oder auch eine zumindest teilweise Zerstörung des empfindlichen Transportgutes sein.

Die Entleerung der in den Bandsegmenten eingeformten Aufnahmetaschen ist genau wie bei üblichen Förderbändern nur über Kopf durch Schwerkraft praktisch realisierbar, wobei die Zuführ-Teile dann aus den Aufnahmetaschen auf die entsprechende folgende Rutsche herausfallen. Maßnahmen, die ein aktives Entleeren der Aufnahmetaschen unterstützen, sind nur schwierig realisierbar.

Hinsichtlich der Funktion der Vereinzelung von Zuführ-Teilen haben bekannten Fördervorrichtungen den Nachteil, dass die einzelnen Bandsegmenten und insbesondere die Aufnahmetaschen durch ihre feste Größe immer eine bestimmte mittlere Anzahl von Zuführ-Teilen mitnehmen, so dass die Dosierung durch den Transport bei einer bestimmten Art von Zuführ-Teil im Wesentlichen fix ist. Soll eine andere Dosierrate realisiert werden, müssen die Bandsegmente komplett demontiert und mit Bandsegmenten bestückt werden, die eine andere Dimensionierung der Aufnahmetaschen zeigen.

Der Vollständigkeit halber ist als weiterer Stand der Technik die DE 18 69 685 U zu nennen, die einen Elevatorbecher mit einem selbsttätigen Auswerfer in Form eines schwenkbaren Bodens offenbart. Dieser Auswerfer ist so geschaffen, dass er beim Entleeren des Fördergutes selbsttätig herausfällt, sodass die inneren Wände des selbsttätig gereinigt und somit eine sogenanntes "Zuwachsen" des Elevators verhindert wird. Mit einem irgendwie gesteuerten Transport oder Dosieren von Zuführ-Teilen hat dies nichts zu tun.

Zusammenfassend stellen die bekannten Systeme zur Handhabung von Zuführ-Teilen keine Lösung für die im Hinblick auf immer leistungsfähigere Montagemaschinen extrem gestiegenen Anforderungen bezüglich Leistungsfähigkeit, Zuverlässigkeit und Funktionsflexibilität solcher Fördervorrichtungen bereit. Die Abdeckung so verschiedener Funktionen, wie Bereitstellung, Vereinzelung, Bunkern, Einlegen, Kontrollieren, Sortieren, Verteilen, Zählen usw. von Zuführ-Teilen in unterschiedlichsten Produktionsumgebungen ist mit bekannten Systemen praktisch nicht zu erfüllen.

Ausgehend von der geschilderten Vielzahl von Problemen des Standes der Technik liegt der Erfindung die Aufgabe zugrunde, eine Fördervorrichtung der gattungsgemäßen Art so umfassend zu verbessern, dass das Risiko von Verklemmungen der Zuführ-Teile innerhalb der Fördervorrichtung praktisch ausgeschlossen, das Entleeren der Aufnahmetaschen unterstützt und eine breite Flexibilisierung der Handhabung der Zuführ-Teile realisiert werden können.

Die vorgenannte Aufgabe wird durch die Merkmale des Anspruches 1 gelöst. Vorteilhafte Ausgestaltungen sind in den Unteransprüchen gekennzeichnet. Demnach sind die Aufnahmetaschen nicht mehr statisch als feste Vertiefungen in den Bandsegmenten vorgesehen, sondern ihnen ist jeweils ein bewegliches Verschlusselement zugeordnet, das durch Steuerelemente zwischen einer geöffneten, für die Aufnahme von Zuführ-Teilen bereiten Aufnahmestellung und einer geschlossenen, mit seiner den Zuführ-Teilen zugewandten, planen Außenseite mit der Plattenoberfläche der Bandsegmente fluchtenden Schließstellung verstellbar ist.

Durch diese erfindungsgemäße Konfiguration sind verschiedene Vorteile gegenüber dem Stand der Technik zu erzielen. Dadurch, dass die Aufnahmetaschen durch das Verschlusselement in einem geschlossenen Zustand mit einer planen Oberfläche gebildet aus der Außenseite der Verschlusselemente und der sie umgebenden Plattenoberfläche in den Vorratsbehälter einfahren, wird dort keinerlei praktisch relevanter Spalt gebildet, so dass die oben geschilderte Verklemmungsproblematik behoben ist.

Sobald sich ein Bandsegment mit seiner Aufnahmetasche im Bereich des Aufgabebehälters und Vorrates an Zuführ-Teilen befindet, kann das Verschlusselement durch entsprechende Steuerelemente geöffnet und somit die Aufnahmetasche für das Eintreten von Zuführ-Teilen zugänglich gemacht werden. Letztere laufen also sehr ruhig ohne nennenswerte Störung der Vorratsmenge und ohne mechanische Belastung in die Aufnahmetasche hinein, was zu einem besonders niedrigen Geräuschniveau beim Betrieb der Fördervorrichtung führt.

Einer der Hauptvorteile der erfindungsgemäßen Konfiguration der Fördervorrichtung liegt in der ermöglichten Regelung der Öffnungsposition und damit einer individuell anpassbaren Dosierrate, mit der die Zuführ-Teile aus dem Teilevorrat entnommen werden. Dies wird durch die definierte, veränderbare Ansteuerung die Aufnahmestellung der Verschlusselemente erreicht, so dass eine Anpassung der Fördervorrichtung an die jeweils gewünschte Aufnahmemenge an Zuführ-Teilen in jeder Aufnahmetasche einfach und problemlos möglich ist. Sollen weniger Zuführ-Teile pro Aufnahmetasche transportiert werden, so wird die Aufnahmestellung des Verschlusselementes so gewählt, dass der zugängliche Raum der Aufnahmetaschen ein geringeres Volumen, also insbesondere eine geringere Tiefe aufweist.

Hinsichtlich der oben erwähnten Nachteile bezüglich der Entleerbarkeit der fixen Aufnahmetasche bei der Fördervorrichtung gemäß dem Stand der Technik ist die Erfindung dahingehend vorteilhaft, dass an der Abwurfposition das Verschlusselement in seine Schließstellung gesteuert und damit die Zuführ-Teile aktiv aus der Aufnahmetasche ausgestoßen werden können. Der Entleerungsvorgang kann damit bei einer Überkopf-Ausgabe unterstützt oder auch - anders als beim Stand der Technik - bei einem ansteigenden Verlauf der Transport-Gliederkette ohne Schwerkrafteinfluss vollzogen werden.

Zusammenfassend stellt der Kern der erfindungsgemäßen Konstruktion eine hohe Bandbreite an Funktionalitäten für die erfindungsgemäße Fördervorrichtung zur Verfügung, die so aus dem Stand der Technik bei Weitem nicht erreicht wird.

Bevorzugte Ausführungsformen des Erfindungsgegenstandes sind in den abhängigen Ansprüchen angegeben. So kann ein Füllstandsensor für die Erfassung des Füllstandes der Zuführ-Teile im Aufgabebehälter vorgesehen und die Öffnungsposition der in den Aufgabebehälter eingefahrenen Aufnahmetaschen an den Füllstand anpassbar sein. Damit wird erreicht, dass die jeweilige Aufnahmetasche nicht in geöffneter Stellung des Verschlusselementes durch den gesamten Teilevorrat im Aufgabebehälter hindurch fährt, sondern erst später zu einem Zeitpunkt aufnahmebereit gemacht wird, zu dem ein zuverlässiges Befüllen der Aufnahmetasche noch gewährleistet ist. Durch diese konstruktive Ausgestaltung werden die Zuführ-Teile bedarfsorientiert entnommen, wobei keinerlei unerwünschte Bauteilbewegungen entstehen und entsprechend Beschädigungen an den Zuführ-Teilen vermieden werden. Dies wirkt sich wiederum sehr positiv auf die geforderte Schonung der im Aufgabebehälter bevorrateten Teile und eine weitere erhebliche Verringerung der Geräuschentwicklung beim Betrieb der Fördervorrichtung aus.

Gemäß einer weiteren bevorzugten Ausführungsform ist die Ausbildung des Verschlusselementes als Klappe vorgesehen. Dies ist konstruktiv einfach umsetzbar, wobei gleichzeitig die der Klappe innenwohnende Schwenkbewegung optimal für die obenstehenden Funktionalitäten geeignet ist. Insbesondere wenn die Klappe um eine am vorlaufenden Ende des jeweiligen Bandsegmentes angeordnete, quer zur Transportrichtung angeordnete Schwenkachse schwenkbar ist, ist die Aufnahmetasche in der Aufnahmestellung des Verschlusselementes optimal für die Übernahme der Zuführ-Teile gestaltet. Es wird nämlich ein sich entgegen der Transportrichtung öffnender, keilförmiger Freiraum der Aufnahmetaschen mit einer in Transportrichtung weisenden Auf- und Mitnahmefläche für die Zuführ-Teile gebildet.

Für eine einfache Auslegung der Ansteuerung für die Verschlusselemente sorgt deren Federbeaufschlagung in Richtung der Aufnahmestellung, wodurch die Aufnahmetaschen ohne Steuereinflüsse von außen zwangsgeöffnet sind. Für die Anpassung der Position der Verschlusselemente an die jeweils gewünschte Funktion können diese dann durch selektiv entlang des Transportweges der Transport-Gliederkette angeordnete Steuerelemente vorzugsweise in Form von statischen Steuerkurven oder aktiv, beispielsweise mittels durch Kolben-Zylinder-Antriebe verstellbaren Steuernocken, in ihrer Position eingestellt werden. Insbesondere bei Verwendung solcher verstellbarer Steuernocken kann eine Änderung der Mengendosierung oder eine Anpassung an einen Typenwechsel bei den Zuführ-Teilen praktisch per Knopfdruck durchgeführt werden, indem beispielsweise bei einer höheren gewünschten Dossierrate der Steuernocken so positioniert wird, dass das Verschlusselement in der jeweiligen Aufnahmetasche weiter geöffnet und somit jede Tasche ein höheres Aufnahmevolumen für die Zuführ-Teile bereitstellt.

In vorteilhafter Weiterbildung der Erfindung können demgemäß durch die selektive Anordnung von als Steuerkurven ausgebildeten Steuerelemente oder eine Ansteuerung von durch Steuernocken realisierten Steuerelemente entlang des Transportweges der Transport-Gliederkette die Verschlusselemente der Aufnahmetaschen an einer oder mehreren Positionen des Transportweges der Transport-Gliederkette über definierte Wegstrecken des Transportweges in die Aufnahmestellung, Schließstellung und/oder diesbezügliche Zwischenstellungen verbringbar sein. Dies ermöglicht eine weitere Verbreiterung des Funktionsspektrums der erfindungsgemäßen Fördervorrichtung. So ist dadurch beispielsweise ein Nachdosieren für die Zuführ-Teile möglich, in dem nach der Übernahme der Zuführ-Teile aus dem Aufgabebehälter an einen danach liegenden Punkt der Förderstrecke das Verschlusselement in Richtung Schließstellung bewegt und damit die Aufnahmetasche verkleinert wird. Dadurch werden Zuführ-Teile aus der Aufnahmetasche gezielt ausgestoßen. Auch eine Ausschleusung von Schlechtteilen in der Aufnahmetasche, welche durch eine entsprechende Sensorik an der Fördereinrichtung ermittelt wurden, wird dadurch möglich. Zum vertiefenden Verständnis dieser Funktionalität wird der Einfachheit halber auf die spätere Beschreibung des Ausführungsbeispiels der Erfindung verwiesen.

Wie oben bereits angedeutet, können die Verschlusselemente der Aufnahmetaschen zu deren Entleerung an verschiedenen Abgabepositionen der Fördervorrichtung aktiv in die Schließstellung steuerbar sein.

Zur weiteren Flexibilisierung insbesondere der Dosierfunktion im Rahmen der Vereinzelung von Zuführ-Teilen dient die bevorzugte Ausführungsform, wonach eine oder mehrere Aufnahmetaschen der Aufnahmen mit mehreren, getrennt voneinander ansteuerbaren Verschlusselementen versehen sein können. Wenn beispielsweise zwei Klappen in einer Aufnahmetasche nebeneinander angeordnet sind, kann die Dosierrate von einem bestimmten Wert bei zwei in Aufnahmestellung befindlichen Klappen auf die demgegenüber halbierte Dosierrate gesenkt werden, wenn eine der beiden Klappen in die Schließstellung übergeführt wird.

Schließlich können die Bandsegmente der Transport-Gliederkette bei geschlossenen Verschlusselementen unabhängig vom Umlenkwinkel der Transport-Gliederkette eine spaltfreie Oberfläche bilden, so dass vorteilhafterweise jede erdenkliche Umlenkung der Transport-Gliederkette bei absoluter Geschlossenheit zwischen den einzelnen Bandsegmenten der Transport-Gliederkette ermöglicht wird. Eine kombinierbare senkrechte, geneigte und waagerechte Förderung ist damit möglich.

Die Vorteile der erfindungsgemäßen Fördervorrichtung sind nochmals zusammenfassend wie folgt aufzulisten:
- Die Fördervorrichtung ist als Zu- oder Wegführband oder auch zur Verkettung von Produktionsstraßen für alle denkbaren Transportaufgaben in Bezug auf Zuführ-Teile einsetzbar. Dabei kann neben der eigentlichen Förderung von Zuführ-Teilen zwischen zwei Stationen eines Produktionsprozesses auch ein Sortieren, Dosieren und Kommissionieren der Zuführ-Teile vonstatten gehen.
- Durch die Planizität der Oberfläche der einzelnen Bandsegmente bei geschlossenem Verschlusselement wird jegliches Verklemmen oder Beschädigen des Fördergutes vermieden.
- Die Bandsegmente mit ihren steuerbaren Aufnahmetaschen bilden ein modulares, in sich geschlossenes System, das - anders als übliche Transportbänder - keine Seitenabdichtsysteme benötigt.
- Die einzelnen plattenartigen Bandsegmente lassen sich auf jeden Bedarfsfall in Länge, Breite und Dicke maßschneidern. Gleichwohl ist innerhalb einer bestimmten Bauart der Bandsegmente durch die Ansteuerbarkeit der Verschlusselemente in den Aufnahmetaschen eine Flexibilisierung der Größe der Aufnahmetaschen möglich.
- Das erfindungsgemäße Konzept ermöglicht einen modularen Aufbau, der für hohe Flexibilität sorgt. Die erfindungsgemäße Fördervorrichtung ist zum Einsatz bei Handarbeitsplätzen oder auch in halb- bis zu vollautomatischen Fertigungsprozessen einsetzbar.
- Das System läuft bedingt durch den Einsatz robuster Komponenten wartungsarm.
- Das Zu- und Abtransportieren von Bauteilen aus geordneten oder ungeordneten Zwischenpuffern zur weiteren Verarbeitung oder zur Verkettung von Produktionsanlagen ist mit dem erfindungsgemäßen Fördersystem besonders effizient und geräuscharm zu realisieren.

Weitere Merkmale, Einzelheiten und Vorteile der Erfindung ergeben sich aus der nachfolgenden Beschreibung eines Ausführungsbeispiels anhand der beigefügten Zeichnungen. Es zeigen:
- Fig. 1: eine höchst schematische, ausschnittsweise Perspektivdarstellung einer Fördervorrichtung zur Vereinzelung von Schüttgut,
- Fig. 2: eine Schrägaufsicht auf die Fördervorrichtung gemäß Fig. 1,
- Fig. 3: eine weggebrochene Perspektivdarstellung der Fördervorrichtung gemäß Fig. 1 im Bereich des Aufgabebehälters,
- Fig. 4: eine schematisierte Seitenansicht der Fördervorrichtung mit unterschiedlichen Funktionspositionen,
- Fig. 5 bis 7: ausschnittsweise Detailvergrößerungen der Funktionspositionen V, VI und VII gemäß Fig. 4, und
- Fig. 8: eine perspektivische Gesamtansicht einer Fördereinrichtung in einer weiteren Ausgestaltung.

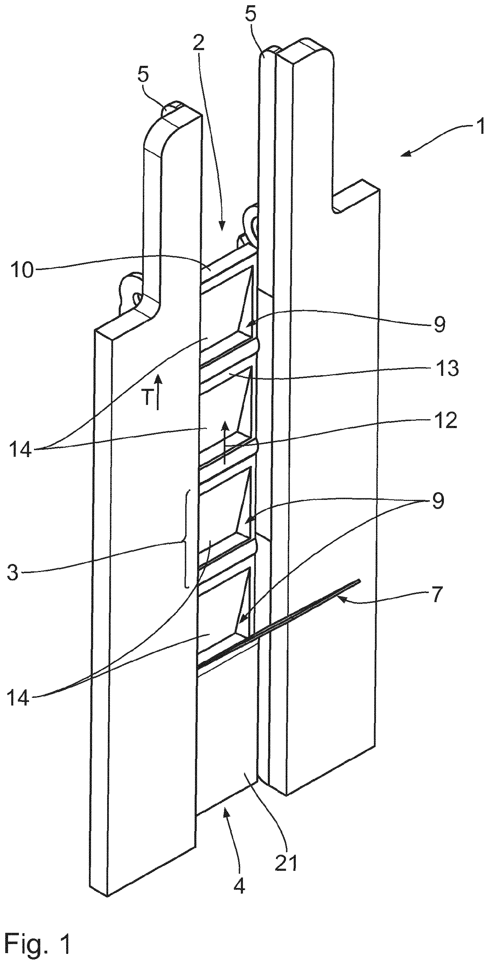

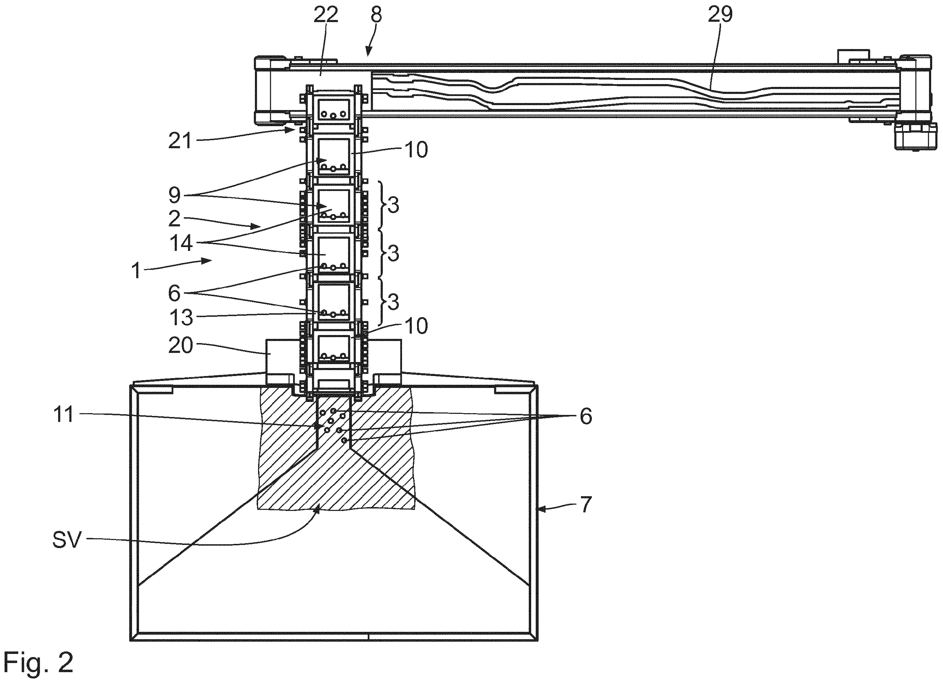

Wie aus Fig. 1 und 2 deutlich wird, weist die gezeigte Fördervorrichtung 1 als zentrales Teil eine Transport-Gliederkette 2 auf, die aus gelenkig aneinandergekoppelten Bandsegmenten 3 zusammengesetzt ist. Die Transport-Gliederkette 2 ist entlang ihrer Längsränder in einer als Ganzes mit dem Bezugszeichen 4 gekennzeichneten Führung abgestützt, die durch zwei jeweils seitlich entlang der Kette 2 verlaufende Führungswangen 5 gebildet ist.

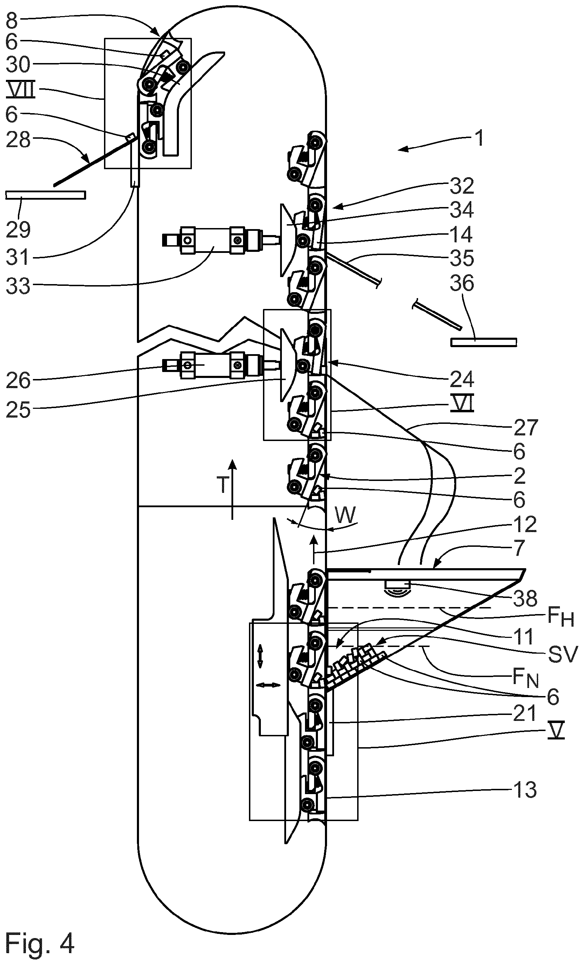

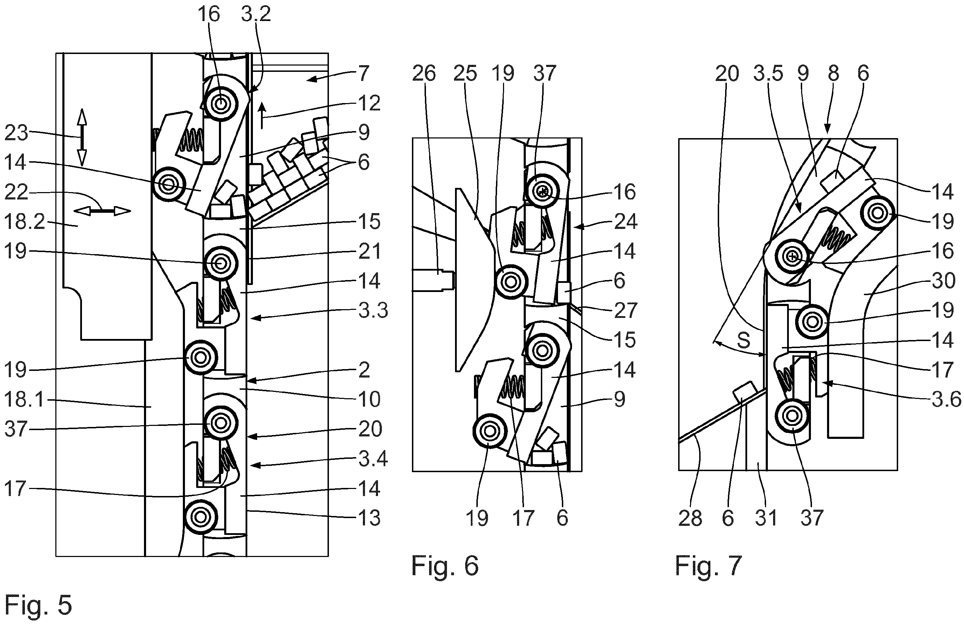

Die Fördervorrichtung 1, die zur Vereinzelung von Schüttgut dient, weist für die entsprechenden Zuführ-Teile 6, wie beispielsweise Hülsen, Schrauben, Mutter, Federteile usw., einen Aufgabebehälter 7 auf, der in Fig. 1 der Übersichtlichkeit halber weggelassen ist. In diesem Aufgabebehälter 7 wird das zu vereinzelnde Schüttgut als geschütteter Vorrat SV - in Fig. 2 schraffiert angedeutet - eingegeben und sukzessive zu einer noch näher zu erörternden Abgabestation 8 (siehe auch Fig. 4 und 7) mit Hilfe der Transport-Gliederkette 2 befördert.

Der vereinzelte Transport der Zuführ-Teile 6 erfolgt dabei durch die Aufnahmetaschen 9, die in den einzelnen, den Bandsegmenten 3 zugeordneten Platten 10 eingeformt sind. Diese Aufnahmetaschen 9 sind zu der Aufgabeöffnung 11 des Aufgabebehälters 7 hin offen. Während die Transport-Gliederkette 2 mit einer vertikalen Bewegungskomponente 12 an der Aufgabeöffnung 11 des Aufgabebehälters 7 vorbeiläuft, können die im Aufgabebehälter 7 bevorrateten Zuführ-Teile 6 sukzessive in die Aufnahmetaschen 9 gleiten und werden so sukzessive nach oben hin in Transportrichtung T entlang der Transport-Gliederkette 2 zur Abgabestation 8 mitgenommen.

Da die Aufnahmetaschen 9 in einer gegenüber den Zuführ-Teilen 6 abgewandten Richtung von der Plattenoberfläche 13 zurückspringen, fallen die Zuführ-Teile 6 ohne nennenswerte Turbulenzen im Teilevorrat SV und damit ohne Lärmentwicklung in die Aufnahmetaschen 9 hinein.

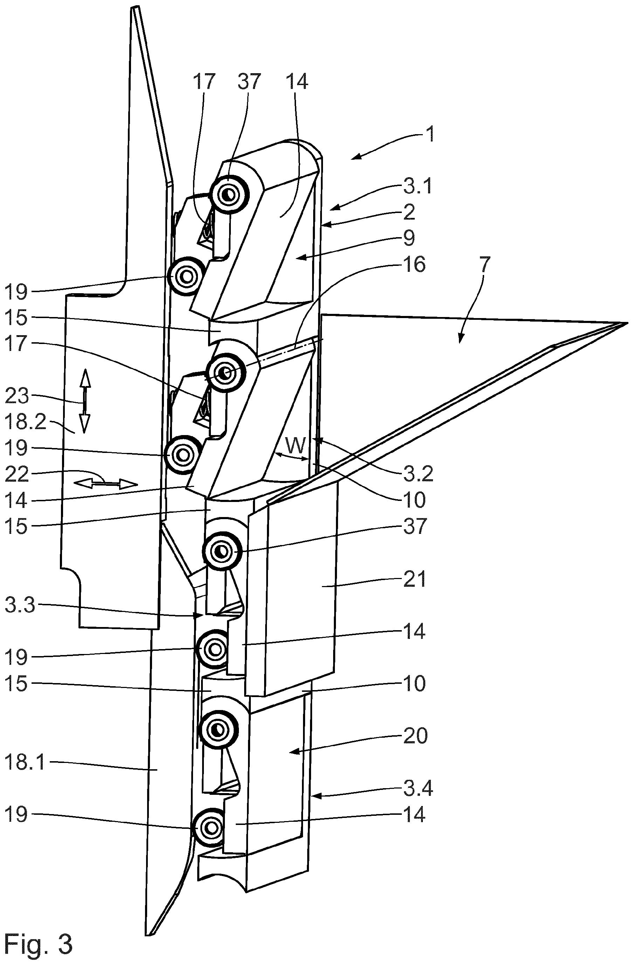

Wie aus Fig. 3 deutlich wird, ist in den Aufnahmetaschen 9 jeweils ein bewegliches Verschlusselement in Form einer Klappe 14 angeordnet, die zwischen einer in Fig. 3 bei den beiden oberen Bandsegmenten 3.1, 3.2 gezeigten Aufnahmestellung und einer bei den beiden unteren Bandsegmenten 3.3, 3.4 gezeigten Schließstellung beweglich ist. Diese Klappe 14 ist um eine am vorlaufenden Ende 15 des jeweiligen Bandsegmentes 3, 3.1 bis 3.4 angeordnete, quer zur Transportrichtung T angeordnete Schwenkachse 16 schwenkbar gelagert. Durch eine in den Fig. 3 bis 7 erkennbare, im Unterbau des jeweiligen Bandsegmentes 3 angeordnete Schraubenfeder 17 sind die Klappen 14 in Richtung der Aufnahmestellung zwangsgeöffnet. Die Ansteuerung der Klappen 14 zur Überführung in die Schließstellung erfolgt - wie in Fig. 3 und 5 gezeigt ist - durch Steuerelemente in Form von selektiv entlang des Transportweges der Gliederkette 2 angeordneten Steuerkurven 18.1, 18.2, die auf die Rollen 19 an den Klappen 14 einwirken. So wird durch die schienenartige Steuerkurve 18.1 im Einlaufbereich der Gliederkette 2 in den Aufgabebehälter 7 jede dort befindliche Klappe 14 entgegen der Beaufschlagung durch die Schraubenfeder 17 in die Schließstellung verbracht. In dieser sind die den Zuführ-Teilen 6 zugewandten, planen Außenseiten 20 der Klappen 14 fluchtend und spaltfrei mit der sie umgebenden Plattenoberfläche 13 der Platten 10 der Bandsegmente 3 angeordnet, so dass hier quasi eine durchgehende, ebene Fläche entsteht. Mit dieser ebenen Fläche fährt das Bandsegment 3 im Einlaufbereich zum Aufgabebehälter 7 spaltfrei an der entsprechenden, zum Aufgabebehälter 7 führenden Führungswange 21 entlang, bis die jeweilige Aufnahmetasche 9 mit geschlossener Klappe 14 vollständig im Bereich des Aufgabebehälters 7 positioniert ist. Erkennbar wird also zu keiner Zeit beim Einlauf der Bandsegmente 3 in den Aufgabebehälter 7 irgendeine Lücke oder Spalt zu den Zuführ-Teilen 6 hin geöffnet, in die diese unkontrolliert hineinfallen könnten.

Erst wenn - wie beim Bandsegment 3.2. in Fig. 3 bzw. 5 gezeigt ist - dieses im Aufgabebehälter 7 angekommen ist, wird durch den Übergang von der Steuerkurve 18.1 zu der zurückspringenden Steuerkurve 18.2 die Klappe 14 geöffnet und damit die Aufnahmetasche 9 für den Einlauf von Zuführ-Teilen 6 geöffnet. Wie durch die Pfeile 22 und 23 in Fig. 3 angedeutet ist, kann der Start der Öffnungsbewegung der Klappe 14 und der maximale Öffnungswinkel W durch eine entsprechende Verstellung der Steuerkurve 18.2 variiert werden. Damit kann eine Dosierrate bezüglich der von den Aufnahmetaschen 9 aufgenommenen Zuführ-Teile 6 variiert werden.

In Fig. 4 ist eine Gesamtansicht der Fördervorrichtung 1 dargestellt, die hier als Senkrecht-Förderer mit einer 180°-Umlenkung der Transport-Gliederkette 2 oben und unten ausgebildet ist. Die Transport-Gliederkette 2 kann jedoch auch in unterschiedliche Winkelrichtungen umgelenkt und die Fördervorrichtung 1 insgesamt auch schräggestellt werden. Mit Ausnahme des Bereichs des Aufgabebehälters kann die Transport-Gliederkette 2 sogar über Teilstrecken waagerecht geführt werden.

Die Übernahme von Zuführ-Teilen 6 im Bereich des Aufgabebehälters 7, wie sie anhand der Fig. 3 erläutert und in Fig. 4 sowie vergrößert in Fig. 5 dargestellt ist, wurde bereits erörtert. In der letztgenannten Zeichnung wird deutlich, dass bei maximal geöffneter Klappe 14 eine bestimmte Anzahl von Zuführ-Teilen 6, hier beispielsweise drei, im Mittel in der Aufnahmetasche 9 mitgenommen werden.

Wie in Fig. 4 weiter dargestellt ist, ist im Aufgabebehälter 7 am oberen Rand ein Füllstandsensor 38 angeordnet, der den Füllstand der Zuführ-Teile 6 im Aufgabebehälter 7 detektiert. Wird ein niedriger Füllstand F_{N} erfasst, werden die Aufnahmetaschen 9 entsprechend weit unten beim Durchfahren der Zone des Aufgabebehälters 7 geöffnet, um dort eine zuverlässige Übernahme von Zuführ-Teilen 6 zu gewährleisten. Sollte ein hoher Füllstand F_{H} vom Füllstandsensor 38 erfasst werden, so würde ein Öffnen der Aufnahmetaschen 9 tief unten im Aufgabebehälter 7 dort zu einer erheblichen Störung des Teilevorrats SV mit einer entsprechenden Gefährdung insbesondere empfindlicher Teile und einer erheblichen Geräuschentwicklung führen. Daher werden bei einem hohen Füllstand F_{H} entsprechend die Aufnahmetaschen 9 erst kurz vor dem Erreichen der Füllstandshöhe zu einem Zeitpunkt geöffnet, wo noch ein zuverlässiges Befüllen der Aufnahmetasche 9 gewährleistet ist. Dadurch werden die weiter unten im Teilevorrat SV liegenden Zuführ-Teile 6 durch die geschlossenen Bandsegmente 3 in keiner Weise beaufschlagt und es erfolgt dementsprechend auch keine Geräuschentwicklung dort.

Wie anhand von Fig. 4 und 6 erläutert werden kann, kann nachfolgend in einer Nachdosier-Station 24 die Zahl der in der jeweiligen Aufnahmetasche 9 befindlichen Zuführ-Teile 6 verringert werden. Dazu wird die Klappe 14 mit Hilfe von Steuerelementen in Form eines verstellbaren Steuernockens 25 in Richtung der Schließstellung verschoben. Die Verstellung der Steuernocken 25 erfolgt durch einen Kolben-Zylinder-Antrieb 26. Durch das teilweise Schließen der Klappe 14 wird ein Teil der in der Aufnahmetasche 9 befindlichen Zuführ-Teile 6 wieder ausgestoßen und gleitet über eine Rutsche 27 in den Schüttgut-Vorrat SV zurück.

Nach der oberen Umlenkung der Transport-Gliederkette 2 ist die Abgabestation 8 angeordnet, die dem Grunde nach ein Entleeren der Aufnahmetaschen 9 durch Schwerkraft vorsieht. Aus den dort kopfüber angeordneten Aufnahmetaschen 9 gleiten die Schüttgutteile 6 durch Schwerkraft heraus und werden über die Rutsche 28 zu dem in Fig. 2 und 4 gezeigten Transportband 29 verbracht. Wie nun in Fig. 4 und 7 erkennbar ist, werden zur Unterstützung der Entleerung der Aufnahmetaschen 9 mit Hilfe der in der Abgabestation 8 angeordneten Steuerkurve 30 dort die Klappen 14 von der Aufnahmestellung - siehe Bandsegment 3.5 in Fig. 4 und 7 - durch Beaufschlagung entgegen der Schraubenfeder 17 in die Schließstellung - siehe Bandsegment 3.6 in Fig. 4 und 7 - verbracht, so dass der Neigungswinkel der die Schüttgutteile 6 tragenden Fläche erhöht und der Schwerkrafteinfluss damit verstärkt wird. Sollte ein Zuführ-Teil 6 an der Klappe 14 haften bleiben, so kann die Rutsche 28 sogar als Abstreifer wirken. Erkennbar ist durch die Klappe 14 in der Schließstellung auch in der Abgabestation 8 keine Lücke zwischen dem sich an die Rutsche 28 anschließenden Abdeckwange 31 und der planen Außenseite 20 der Bandsegmente 3 gebildet. Auch hier ist also ein Verklemmen von Zuführ-Teilen 6 äußerst zuverlässig unterbunden. Ferner sind durch diese konstruktive Ausgestaltung keinerlei zusätzlichen Schutzeinrichtungen gegen einen Eingriff in die Maschine notwendig.

Anhand von Fig. 4 ist eine weitere Flexibilisierung der Funktionsweise der Fördervorrichtung 1 zu erläutern. So kann beispielsweise auch eine Abgabe der Zuführ-Teile 6 aus den Aufnahmetaschen 9 an beliebiger Position der Fördervorrichtung 1 vollzogen werden, indem beispielsweise in Transportrichtung T nach der Nachdosierstation 24 eine weitere Abgabestation 32 realisiert wird, in der individuell Zuführ-Teile 6 ausgestoßen werden können. Dazu ist ein weiterer, durch einen Kolben-Zylinder-Antrieb 33 verstellbarer Steuernocken 34 vorgesehen, mit dessen Hilfe die jeweils in der Abgabestation 32 befindliche Klappe 14 in ihre Schließstellung übergeführt und die in der jeweiligen Aufnahmetasche 9 befindlichen Zuführ-Teile 6 dort ausgestoßen und über eine Rutsche 35 beispielsweise auf ein weiteres Transportband 36 verbracht werden können. Wenn in der Abgabestation 32 nur jede zweite Klappe 14 geschlossen wird, kann der aus dem Aufgabebehälter 7 abgeführte Strom von Zuführ-Teilen 6 in zwei Teilmengen aufgeteilt werden, die jeweils über die Transportbänder 29, 36 zu weiteren Prozessstationen geführt werden können.

Anhand von Fig. 5 ist schließlich darauf hinzuweisen, dass die Bandsegmente 3 über Führungsrollen 37 in entsprechenden Laufbahnen in den Führungswangen 5 rollend gelagert und zueinander verschwenkbar gekoppelt sind. Dabei sind die Bandsegmente 3 so ausgelegt, dass bei geschlossenen Klappen 14 die Bandsegmente 3 unabhängig von ihrem Schwenkwinkel S (Fig. 7) zueinander eine praktisch spaltfreie, geschlossene Oberfläche nach außen bilden.

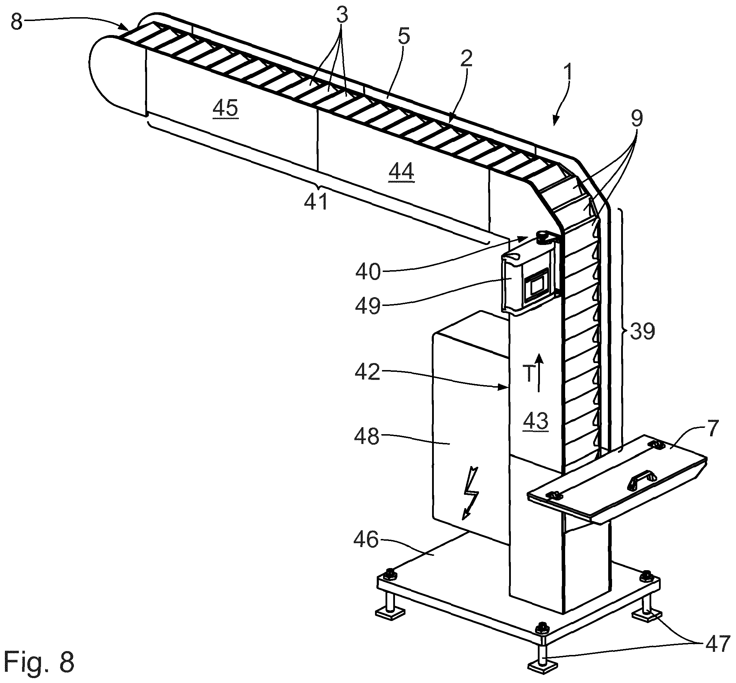

Abschließend soll anhand von Fig. 8 noch die universelle Anpassbarkeit und Modularität der hier beschriebenen Fördervorrichtungen deutlich gemacht werden. So weist die in dieser Zeichnung dargestellte Fördervorrichtung 1 ausgehend vom Aufgabebehälter 7 einen ersten, senkrecht nach oben verlaufenden Ast 39 auf, der beispielsweise analog der in Figur 4 dargestellten Konfiguration aufgebaut sein kann. Die senkrecht hoch laufende Transport-Gliederkette 2 mit den einzelnen Bandsegmenten 3 und den darin ausgebildeten Aufnahmetaschen 9 transportiert darin zuverlässig die nicht näher dargestellten Zuführ-Teile 6 aus dem Aufgabebehälter 7 nach oben. Über eine Umlenkung 40 um 90° wird ein zweiter Ast 41 erreicht, in dem trotz dessen horizontaler Ausrichtung die Zuführ-Teile 6 zuverlässig in den Aufnahmetaschen 9 verbleiben. Die Höhe des vertikalen Astes 39 genauso wie die des horizontalen Astes 41 kann an die örtlichen Gegebenheiten entsprechend angepasst werden, wobei das Grundgestell 42 beispielsweise durch modulare Sektionen 43 bis 45 zusammengesetzt werden kann. Zur Anpassung der Transport-Gliederkette 2 an die jeweiligen Gegebenheiten und insbesondere die Länge des Transportweges ist lediglich die entsprechende Anzahl von Bandsegmenten 3 vorzusehen.

Solche Transportvorrichtungen können ihre Funktion auch zuverlässig erfüllen, wenn einzelne Sektionen- wie in Fig. 8 nicht näher dargestellt ist - in einer Ausrichtung zwischen vertikal und horizontal verlaufen. Ferner können die oben beschriebenen Zusatzeinrichtungen, wie eine Nachdosier- oder Ausschleusstation für Schlechtteile dem vertikalen Ast 39 zugeordnet werden.

Zur Vervollständigung der Beschreibung der Fig. 8 wird auf die die Transportvorrichtung 1 lagernde Bodenplatte 46 mit Fußverankerungen 47, den Schaltschrank 48 und das Bedientableau 49 verwiesen.

## Patentansprüche

1. Fördervorrichtung (1) zum Transport und zur Dosierung von insbesondere empfindlichen Zuführ-Teilen (6), umfassend
- einen Aufgabebehälter (7) für die Zuführ-Teile (6), und
- eine an einer Aufgabeöffnung (11) des Aufgabebehälters (7) mit einer vertikalen Bewegungskomponente (12) vorbei laufende Transport-Gliederkette (2) mit
= gelenkig aneinander gekoppelten, plattenartigen Bandsegmenten (3) und
= Aufnahmen in den Bandsegmenten (3) für die Zuführ-Teile (6), die durch gegenüber der Plattenoberfläche (13) in von den Zuführ-Teilen (6) abgewandter Richtung zurückspringende Aufnahmetaschen (9) gebildet sind,
**dadurch gekennzeichnet, dass**
- die Aufnahmetaschen (9) jeweils ein bewegliches Verschlusselement aufweisen, das durch Steuerelemente (18, 25, 30, 34) zwischen einer geöffneten, für die Aufnahme von Zuführ-Teilen (6) bereiten Aufnahmestellung und einer geschlossenen, mit seiner den Zuführ-Teilen (6) zugewandten, planen Außenseite (20) mit der Plattenoberfläche (13) fluchtenden Schließstellung insbesondere beim Einfahren der Aufnahmetaschen (9) in den Aufgabebehälter (7) verstellbar ist.

2. Fördervorrichtung nach Anspruch 1, **dadurch gekennzeichnet, dass** ein Füllstandsensor (38) für die Erfassung des Füllstandes der Zuführ-Teile (6) im Aufgabebehälter (7) vorgesehen und die Öffnungsposition der in den Aufgabebehälter (7) eingefahrenen Aufnahmetaschen (9) an den Füllstand anpassbar ist.

3. Fördervorrichtung nach Anspruch 1 oder 2, **dadurch gekennzeichnet, dass** das Verschlusselement durch eine Klappe (14) gebildet ist.

4. Fördervorrichtung nach Anspruch 3, **dadurch gekennzeichnet, dass** die Klappe (14) um eine am vorlaufenden Ende (15) des jeweiligen Bandsegmentes (3) angeordnete, quer zur Transportrichtung (T) angeordnete Schwenkachse (16) schwenkbar ist.

5. Fördervorrichtung nach einem der vorgenannten Ansprüche, **dadurch gekennzeichnet, dass** das Verschlusselement, insbesondere die Klappe (14), in Richtung der Aufnahmestellung vorzugsweise durch Federbeaufschlagung, insbesondere durch eine Schraubenfeder (17), zwangsgeöffnet ist.

6. Fördervorrichtung nach einem der vorgenannten Ansprüche, **dadurch gekennzeichnet, dass** die Steuerelemente durch selektiv entlang des Transportweges der Transport-Gliederkette (2) angeordnete Steuerkurven (18, 34) gebildet sind.

7. Fördervorrichtung nach einem der vorgenannten Ansprüche, **dadurch gekennzeichnet, dass** die Steuerelemente durch selektiv entlang des Transportweges der Transport-Gliederkette (2) angeordnete, vorzugsweise durch Kolben-Zylinder-Antriebe (26, 33) verstellbare Steuernocken (25, 34) gebildet sind.

8. Fördervorrichtung nach Anspruch 6 oder 7, **dadurch gekennzeichnet, dass** durch die selektive Anordnung der Steuerkurven (18, 30) oder die Ansteuerung der verstellbaren Steuernocken (25, 34) entlang des Transportweges der Transport-Gliederkette (2) die Verschlusselemente (14) der Aufnahmetaschen (9) an ein oder mehreren Positionen des Transportweges der Transport-Gliederkette (2) über definierte Wegstrecken des Transportweges in die Aufnahmestellung, Schließstellung und/oder diesbezüglichen Zwischenstellungen verbringbar sind.

9. Fördervorrichtung nach einem der vorgenannten Ansprüche, **dadurch gekennzeichnet, dass** an Abgabepositionen der Fördervorrichtung (1) die Verschlusselemente (14) zur Entleerung der Aufnahmetaschen (9) aktiv in die Schließstellung steuerbar sind.

10. Fördervorrichtung nach einem der vorgenannten Ansprüche, **dadurch gekennzeichnet, dass** eine oder mehrere Aufnahmetaschen (9) jeweils mit mehreren, getrennt voneinander ansteuerbaren Verschlusselementen versehen sind.

11. Fördervorrichtung nach einem der vorgenannten Ansprüche, **dadurch gekennzeichnet, dass** die Bandsegmente (3) der Transport-Gliederkette (2) bei geschlossenen Verschlusselementen (14) unabhängig vom Schwenkwinkel (S) der Bandsegmente (3) zueinander eine spaltfreie Oberfläche bilden.

## Claims

1. Conveyor device (1) for transporting and dosing in particular sensitive supply parts (6), comprising
- a feed container (7) for the supply parts (6), and
- a transport link chain (2) with a vertical movement component (12) passing a feed opening (11) of the feed container (7), the transport link chain (2) comprising
= plate-like belt segments (3), which are articulated to each other, and
= receptacles in the belt segments (3) for the supply parts (6), the receptacles being formed by receiving pockets (9), which are recessed in relation to the plate surface (13) in a direction facing away from the supply parts (6),
**characterised in that**
- the receiving pockets (9) each have a movable closure element, which is displaceable, by means of control elements (18, 25, 30, 34), between an open receiving position ready to receive supply parts (6) and a closed closing position where the flat outer side (20) thereof facing the supply parts (6) is flush with the plate surface (13), in particular when retracting the receiving pockets (9) into the feed container (7).

2. Conveyor device according to claim 1, **characterised in that** a fill level sensor (38) is provided for detecting the fill level of the supply parts (6) in the feed container (7), and the opening position of the receiving pockets (9) retracted in the feed container (7) is adjustable to the fill level.

3. Conveyor device according to claim 1 or 2, **characterised in that** the closure element is formed by a flap (14).

4. Conveyor device according to claim 3, **characterised in that** the flap (14) is pivotable about a pivot axis (16) arranged transversely to the transport direction (T) at the leading end (15) of the respective belt segment (3).

5. Conveyor device according to any one of the preceding claims, **characterised in that** the closure element, in particular the flap (14), is force-opened in the direction of the receiving position, preferably by means of a spring, in particular by means of a helical spring (17).

6. Conveyor device according to any one of the preceding claims, **characterised in that** the control elements are formed by control curves (18, 34) arranged selectively along the transport path of the transport link chain (2).

7. Conveyor device according to any one of the preceding claims, **characterised in that** the control elements are formed by control cams (25, 34) arranged selectively along the transport path of the transport link chain (2), the control cams (25, 34) being preferably adjustable by means of piston-cylinder actuators (26, 33).

8. Conveyor device according to claim 6 or 7, **characterised in that** by the selective arrangement of the control curves (18, 30) or the actuation of the adjustable control cams (25, 34) along the transport path of the transport link chain (2), the closure elements (14) of the receiving pockets (9) are movable into the receiving position, the closing position and/or relative intermediate positions at one or more positions of the transport path of the transport link chain (2) over defined distances of the transport path.

9. Conveyor device according to any one of the preceding claims, **characterised in that** at delivery positions of the conveyor device (1), the closure elements (14) are actively actuable into the closing position for emptying the receiving pockets (9).

10. Conveyor device according to any one of the preceding claims, **characterised in that** one or more receiving pockets (9) are each provided with a plurality of closure elements actuable separately from each other.

11. Conveyor device according to any one of the preceding claims, **characterised in that** when the closure elements (14) are closed, the belt segments (3) of the transport link chain (2) form a gap-free surface irrespective of the pivot angle (S) of the belt segments (3) relative to each other.

## Revendications

1. Dispositif de convoyage (1) pour transporter et doser en particulier des pièces d'alimentation (6) fragiles, comprenant
- un contenant de chargement (7) pour les pièces d'alimentation (6), et
- une chaîne de transport à maillons (2) passant devant une ouverture de chargement (11) du contenant de chargement (7) avec une composante de mouvement vertical (12) avec
= des segments de bande (3) en forme de plaque couplés de manière articulée les uns par rapport aux autres et
= des réceptacles dans les segments de bande (3) pour les pièces d'alimentation (6), lesquels réceptacles sont formés par des poches de réception (9) en retrait par rapport à la surface de plaque (13) dans une direction distale par rapport aux pièces d'alimentation (6),
**caractérisé en ce que**
- les poches de réception (9) présentent respectivement un élément d'obturation mobile qui peut être réglé par des éléments de guidage (18, 25, 30, 34), en particulier lors de l'introduction des poches de réception (9) dans le contenant de chargement (7), entre une position de réception ouverte prête à réceptionner des pièces d'alimentation (6) et une position de fermeture fermée alignée sur la surface de plaque (13) avec son côté extérieur (20) plat orienté vers les pièces d'alimentation (6).

2. Dispositif de convoyage selon la revendication 1, **caractérisé en ce qu'**un capteur de niveau de remplissage (38) est prévu dans le contenant de chargement (7) pour détecter le niveau de remplissage des pièces d'alimentation (6) et la position d'ouverture des poches de réception (9) introduites dans le contenant de chargement (7) peut être ajustée au niveau de remplissage.

3. Dispositif de convoyage selon la revendication 1 ou 2, **caractérisé en ce que** l'élément d'obturation est formé par un clapet (14).

4. Dispositif de convoyage selon la revendication 3, **caractérisé en ce que** le clapet (14) peut pivoter autour d'un axe de pivotement (16) agencé au niveau de l'extrémité avancée (15) du segment de bande (3) respectif, perpendiculairement à la direction de transport (T).

5. Dispositif de convoyage selon l'une quelconque des revendications précédentes, **caractérisé en ce que** l'élément d'obturation, en particulier le clapet (14), est ouvert de force dans la direction de la position de réception de préférence par une sollicitation de ressort, en particulier par un ressort hélicoïdal (17).

6. Dispositif de convoyage selon l'une quelconque des revendications précédentes, **caractérisé en ce que** les éléments de guidage sont formés par des courbes de guidage (18, 34) sélectivement agencées le long du chemin de transport de la chaîne de transport à maillons (2).

7. Dispositif de convoyage selon l'une quelconque des revendications précédentes, **caractérisé en ce que** les éléments de guidage sont formés par des cames de guidage (25, 34) sélectivement agencées le long du chemin de transport de la chaîne de transport à maillons (2), pouvant de préférence être réglées par des entraînements piston-cylindre (26, 33).

8. Dispositif de convoyage selon la revendication 6 ou 7, **caractérisé en ce que** grâce à l'agencement sélectif des courbes de guidage (18, 30) ou le guidage des cames de guidage (25, 34) réglables le long du chemin de transport de la chaîne de transport à maillons (2), les éléments d'obturation (14) des poches de réception (9) peuvent être amenés, au niveau d'une ou plusieurs positions du chemin de transport de la chaîne de transport à maillons (2) passant par des parcours définis du chemin de transport, dans la position de réception, la position de fermeture et/ou des positions intermédiaires relatives à celles-ci.

9. Dispositif de convoyage selon l'une quelconque des revendications précédentes, **caractérisé en ce qu'**au niveau de positions de déchargement du dispositif de convoyage (1) les éléments d'obturation (14) peuvent être guidés de manière active dans la position de fermeture pour vider les poches de réception (9).

10. Dispositif de convoyage selon l'une quelconque des revendications précédentes, **caractérisé en ce qu'**une ou plusieurs poches de réception (9) sont respectivement prévues avec plusieurs éléments d'obturation pouvant être guidés et séparément les uns des autres.

11. Dispositif de convoyage selon l'une quelconque des revendications précédentes, **caractérisé en ce que** les segments de bande (3) de la chaîne de transport à maillons (2) forment les uns par rapport aux autres une surface sans interstices lorsque les éléments d'obturation (14) sont fermés, indépendamment de l'angle de pivotement (S) des segments de bande (3).
